# NEUE EUROPÄISCHE PATENTSCHRIFT

(11) **EP 0 382 071 B2**
(45) Veröffentlichungstag und Bekanntmachung des Hinweises auf die Entscheidung über den Einspruch: **08.09.2004**
(45) Hinweis auf die Patenterteilung: 28.04.1993
(21) Anmeldenummer: 90101900.0
(22) Anmeldetag: 31.01.1990
(51) Int. Cl.: C09K 7/06

(54) **Monocarbonsäure-Methylester in Invert-Bohrspülschlämmen**
Monocarboxylic-acid methyl ester for invert emulsion drilling fluids
Méthylester d'acide monocarboxylique dans des fluides de forage du type émulsion inverse

(30) Priorität: 09.02.1989 DE 3903784
(43) Veröffentlichungstag der Anmeldung: 16.08.1990
(73) Patentinhaber: Cognis Deutschland GmbH, 40589 Düsseldorf (DE)
(72) Erfinder: Müller, Heinz, D-4019 Monheim (DE); Herold, Claus-Peter, Dr., D-4020 Mettmann (DE); von Tapavicza, Stephan, Dr., D-4006 Erkrath 2 (DE)
(74) Vertreter: Reinhardt, Jürgen, Dr.

(56) Entgegenhaltungen:
- EP-A- 0 009 746
- WO-A-87/03613
- DE-A- 3 419 415
- FR-A- 2 560 210
- RO-A- 80 940
- US-A- 2 217 926
- US-A- 2 689 219
- US-A- 2 698 833
- US-A- 2 816 073
- US-A- 2 862 881
- US-A- 2 999 063
- US-A- 3 507 792
- US-A- 3 761 410
- US-A- 3 894 959
- US-A- 4 356 096
- US-A- 4 374 737
- US-A- 4 409 108
- US-A- 4 474 666
- US-A- 4 481 121
- US-A- 4 481 121
- US-A- 4 631 136
- US-A- 4 802 998
- US-A- 4 964 615
- US-A- 5 212 794
- Revue de L Instutut Francais Du Pétrole, Vol. 40(4) 1985, Gateau, Guibet, Hillion, Stern, "Use of vegetable oils and their transesterification products as diesel fuels" S. 509-528
- Schmierungstechnik, 1985, 32(2) Wildersohn, "Ester oils-structure and chemical-physical prperties" S. 70-75

## Beschreibung

Die Erfindung beschreibt neue Bohrspülflüssigkeiten auf Basis von Esterölen und darauf aufgebaute Invert-Bohrspülschlämme, die sich durch hohe ökologische Verträglichkeit bei gleichzeitig guten Stand- und Gebrauchseigenschaften auszeichnen. Ein wichtiges Einsatzgebiet für die neuen Bohrspülsysteme sind off-shore-Bohrungen zur Erschließung von Erdöl- und/oder Erdgasvorkommen, wobei es hier die Erfindung insbesondere darauf abstellt, technisch brauchbare Bohrspülungen mit hoher ökologischer Verträglichkeit zur Verfügung zu stellen. Der Einsatz der neuen Bohrspülsysteme hat besondere Bedeutung im marinen Bereich, ist aber nicht darauf eingeschränkt. Die neuen Spülsysteme können ganz allgemeine Verwendung auch bei landgestützten Bohrungen finden, beispielsweise beim Geothermiebohren, beim Wasserbohren, bei der Durchführung geowissenschaftlicher Bohrungen und bei Bohrungen im Bergbaubereich. Grundsätzlich gilt auch hier, daß durch die erfindungsgemäß ausgewählten Bohrölflüssigkeiten auf Esterbasis der ökotoxische Problembereich substantiell vereinfacht wird.

Flüssige Spülsysteme zur Niederbringung von Gesteinsbohrungen unter Aufbringen des abgelösten Bohrkleins sind bekanntlich beschänkt eingedickte fließfähige Systeme auf Wasserbasis oder auf Ölbasis. Diese zuletzt genannten Systeme auf Ölbasis finden in der Praxis zunehmende Bedeutung und hier insbesondere im Bereich der off-shore-Bohrungen oder beim Durchteufen wasserempfindlicher Schichten.

Bohrspülungen auf Ölbasis werden im allgemeinen als sogenannte Invert-Emulsionsschlämme eingesetzt, die aus einem Dreiphasensystem bestehen: Öl, Wasser und feinteilige Feststoffe. Es handelt sich dabei um Zubereitungen vom Typ der W/O-Emulsionen, d. h. die wäßrige Phase ist heterogen fein-dispers in der geschlossenen Ölphase verteilt. Zur Stabilisierung des Gesamtsystems und zur Einstellung der gewünschten Gebrauchseigenschaften ist eine Mehrzahl von Zusatzstoffen vorgesehen, insbesondere Emulgatoren bzw. Emulgatorsysteme, Beschwerungsmittel, fluid-loss-Additive, Alkalireserven, Viskositätsregler und dergleichen. Zu Einzelheiten wird beispielsweise verwiesen auf die Veröffentlichung P. A. Boyd et al. "New Base Oil Used in Low-Toxicity Oil Muds" Journal of Petroleum Technology, 1985, 137 bis 142 sowie R. B. Bennett "New Drilling Fluid Technology - Mineral Oil Mud" Journal of Petroleum Technology, 1984, 975 bis 981 sowie die darin zitierte Literatur.

Öl-basierte Bohrspülungen waren zunächst aufgebaut auf Dieselölfraktionen mit einem Gehalt an Aromaten. Zur Entgiftung und Verminderung der damit geschaffenen ökologischen Problematik ist dann vorgeschlagen worden, weitgehend aromatenfreie Kohlenwasserstofffraktionen - heute auch als "nonpolluting oils" bezeichnet - als geschlossene Ölphase einzusetzen - siehe hierzu die zuvor zitierte Literatur. Wenn auf diese Weise auch durch den Ausschluß der aromatischen Verbindungen gewisse Fortschritte erreicht worden sind, so erscheint eine weitere Minderung der Umweltproblematik - ausgelöst durch Bohrspülflüssigkeiten der hier betroffenen Art- dringend erforderlich. Gültigkeit hat das insbesondere beim Niederbringen von off-shore-Bohrungen zur Erschließung von Erdöl- bzw. Erdgasvorkommen, weil das marine Ökosystem besonders empfindlich auf das Einbringen von toxischen und schwer abbaubaren Substanzen reagiert.

Die einschlägige Technologie hat seit einiger Zeit die Bedeutung von Ölphasen auf Esterbasis zur Lösung dieser Problematik erkannt. So beschreiben die US-Patentschriften 4,374,737 und 4,481,121 ölbasierte Bohrspülflüssigkeiten, in denen nonpolluting oils Verwendung finden sollen. Als nonpolluting oils werden nebeneinander und gleichwertig aromatenfreie Mineralölfraktionen und Pflanzenöle von der Art Erdnußöl, Sojabohnenöl, Leinsamenöl, Maisöl, Reisöl oder auch Öle tierischen Ursprungs wie Walöl genannt. Durchweg handelt es sich bei den hier genannten Esterölen pflanzlichen und tierischen Ursprungs um Triglyceride natürlicher Fettsäuren, die bekanntlich eine hohe Umweltverträglichkeit besitzen und gegenüber Kohlenwasserstofffraktionen - auch wenn diese aromatenfrei sind - aus ökologischen Überlegungen deutliche Überlegenheit besitzen.

Interessanterweise schildert dann aber kein Beispiel der genannten US-Patentschriften die Verwendung solcher natürlicher Esteröle in Invert-Bohrspülungen der hier betroffenen Art. Durchweg werden Mineralölfraktionen als geschlossene Ölphase eingesetzt.

Die der Erfindung zugrunde liegenden Untersuchungen haben gezeigt, daß der im Stand der Technik erwogene Einsatz von leicht abbaubaren Ölen pflanzlichen und/oder tierischen Ursprungs aus praktischen Gründen nicht in Betracht kommen kann. Die rheologischen Eigenschaften solcher Ölphasen sind für den breiten in der Praxis geforderten Temperaturbereich von 0 bis 5 °C einerseits sowie bis zu 250 °C und darüber andererseits nicht in den Griff zu bekommen.

Esteröle der hier betroffenen Art verhalten sich tatsächlich im Einsatz nicht gleich wie die bisher verwendeten Mineralölfraktionen auf reinem Kohlenwasserstoffbasis. Esteröle unterliegen im praktischen Einsatz auch und gerade in W/O-Invert-Bohrspülschlämmen einer partiellen Hydrolyse. Hierdurch werden freie Carbonsäuren gebildet. Diese wiederum reagieren mit den in Bohrspülsystemen der hier betroffenen Art stets vorliegenden alkalischen Bestandteilen - z. B. mit der zum Korrosionsschutz eingesetzten Alkalireserve - zu den entsprechenden Salzen. Salze aus stark hydrophilen Basen und den in Ölen natürlichen Ursprungs überwiegend anzutreffenden Säuren des Bereichs von etwa C₁₂₋₂₄ sind aber bekanntlich Verbindungen mit vergleichsweise hohen HLB-Werten, die insbesondere zur Einstellung und Stabilisierung von O/W-Emulsionen führen. Die Wasch- und Reinigungstechnik macht hiervon bekanntlich in größtern Umfange Gebrauch. Die Bildung auch schon beschränkter Mengen solcher O/W-Emulgatorsysteme muß aber mit den im Sinne der erfindungsgemäßen Zielsetzung geforderten W/O-Emulsionen interferieren und damit zu Störungen führen.

Gegenstand der älteren deutschen Anmeldungen P38·42·659.5 "Verwendung ausgewählter Esteröle in Bohrspülungen (I)" sowie P38·42·703.6 Verwendung ausgewählter Esteröle in Bohrspülungen (II)" ist die Verwendung von Esterölen auf Basis jeweils ausgewählter Monocarbonsäuren bzw. Monocarbonsäuregemische und monofunktioneller Alkohole mit wenigstens 2, bevorzugt mit wenigstens 4 Atomen. Die älteren Anmeldungen schildern, daß mit den dort offenbarten Estern bzw. Estergemischen monofunktioneller Reaktanten nicht nur in der frischen Bohrspülung befriedigende rheologische Eigenschaften eingestellt werden können, sondern daß es auch gelingt, unter Mitverwendung ausgewählter bekannter Alkalireserven in der Bohrspülung zu arbeiten und auf diese Weise unerwünschte Korrosion zurückzuhalten. Als Alkalireserve wird der Zusatz von Kalk ( Calciumhydroxid bzw. lime) und/oder die Mitverwendung von Zinkoxid oder vergleichbaren Zinkverbindungen vorgesehen. Dabei ist allerdings eine zusätzliche Einschränkung zweckmäßig. Soll im praktischen Betrieb die unerwünschte Eindickung des ölbasischen Invert-Spülsystems verhindert werden, so ist die Menge des alkalisierenden Zusatzstoffes und insbesondere die Kalkmenge zu begrenzen. Der vorgesehene Höchstbetrag ist nach der Offenbarung der genannten älteren Anmeldungen bei etwa 2 lb/bbl Ölspülung angesetzt.

Bewußt ist in diesen älteren Anmeldungen die im Esteröl eingesetzte Alkoholkomponente auf wenigstens 2 und bevorzugt auf wenigstens 4 C-Atome eingeschränkt. Anlaß hierfür ist die der einschlägigen Fachwelt bekannte Tatsache, daß die Methylester von Carbonsäuren in Gegenwart von Wasser besonders leicht der Hydrolyse unter Bildung der freien Carbonsäuren unterliegen. Bei höheren Alkoholkomponenten wird diese Hydrolyseneigung abgeschwächt. Die Verwendung von Monocarbonsäuremethylestern in Invert-Bohrspülungen vom Typ der W/O-Emulsionen erschien sinnlos. Durch ihre starke Hydrolyseneigung und die damit zu erwartende frühzeitige Bildung größerer Mengen der freien Carbonsäuren bzw. der daraus sich bildenden Salze mit O/W-Emulgatoreigenschaften war eine nachhaltige Beeinträchtigung des Gesamtsystems zu befürchten.

Die Lehre der Erfindung geht von der überraschenden Feststellung aus, daß das Gegenteil der Fall ist. Methylester von Monocarbonsäuren erweisen sich in W/O-Invert-Bohrölschlämmen als besonders wertvolle Esterölkomponenten. Das gilt selbst dann, wenn beträchtliche Mengen an basischen Materialien konventioneller Art als Alkalireserve in der Bohrspülung vorliegen. So kann in Invert-Bohrschlämmen auf Basis von Esterölen als geschlossene Ölphase mit größeren Kalkmengen als Zuschlagstoff gearbeitet werden, als es in den genannten älteren Anmeldungen beschrieben ist, ohne daß eine frühzeitige unerwünschte Verdickung der Spülung auftritt. Die Methylester des betroffenen und im nachfolgenden im einzelnen geschilderten C-Bereichs können dabei die Esterölphase insgesamt ausbilden, es hat sich aber darüber hinaus gezeigt, daß schon die Mitverwendung beschränkter Mengen an Methylestern in der geschlossenen Ölphase zu substantiellen Verbesserungen in der Rheologie der Bohrspülung, in ihrem Alterungsverhalten und in ihrer Sensibilität gegenüber der Mitverwendung von Alkalireserven zum Schutz gegen unerwünschte Korrosion führt.

Gegenstand der Erfindung ist dementsprechend in einer ersten Ausführungsform die Verwendung der Methylester von Monocarbonsäuren des Bereichs C₆₋₂₄ als Ölphase oder Bestandteil der Ölphase im Mengen von 10 bis 100 Gew.-%, bezogen auf die Ölphase, von Invert-Bohrspülschlämmen, die für eine umweltschonende Erschließung von beispielsweise Erdöl- bzw. Erdgasvorkommen geeignet sind und in einer geschlossenen Ölphase eine disperse wäßrige Phase zusammen mit Kalk als Alkalireserve Emulgatoren, Beschwerungsmitteln, fluid-loss-Additiven und gewünschtenfalls weiteren üblichen Zusatzstoffen enthalten.

In einer weiteren Ausführungsform betrifft die Erfindung W/O-Invert-Bohrspülungen, die beispielsweise für die off-shore-Erschließung von Erdöl- bzw. Erdgasvorkommen geeignet sind und in einer geschlossenen Ölphase eine disperse wäßrige Phase zusammen mit Kalk als Alkalireserve, Emulgatoren, Beschwerungsmitteln, fluid-loss-Additiven und gewünschtenfalls weiteren üblichen Zusatzstoffen enthalten, wobei hier die Erfindung dadurch gekennzeichnet ist, daß die Ölphase Methylester von Monocarbonsäuren mit 6 bis 24 C-Atomen im Mengen von 10 bis 100 Gew.-%, bezogen auf die Ölphase, gewünschtenfalls in Abmischung mit anderen Ölkomponenten aus der Klasse der sogenannten nonpolluting oils enthält.

Es ist dabei bevorzugt, Monocarbonsäuremethylester oder Gemische von solchen Methylestern einzusetzen, die bei Raumtemperaturund insbesondere auch im Temperaturbereich von 0 bis 5 °C fließ- und pumpfähig sind. Zweckmäßigerweise besitzt die Methylester enthaltende Ölphase der Invert-Bohrspülungen im Temperaturbereich von 0 bis 5 °C eine Brookfield(RVT)-Viskosität nicht oberhalb 50 mPas, vorzugsweise nicht oberhalb 40 mPas und insbesondere von höchstens etwa 30 mPas. Diese Zahlenwerte für bevorzugte Invert-Bohrspülungen im Sinne der Erfindung gelten dabei sowohl für Stoffgemische, die Methylester bzw. Methylestergemische als alleinigen Bestandteil der geschlossenen Ölphase enthalten als auch für solche Materialien, in denen die Methylester nur einen Mischungsbestandteil der Ölphase ausmachen.

Die im Bohrschlamm eingesetzten Monocarbonsäuremethylester bzw. solche Komponenten enthaltenden Ölgemische besitzen vorzugsweise Erstarrungswerte (Fließ- und Stockpunkt) unterhalb 0 °C, zweckmäßigerweise unterhalb - 5 °C und insbesondere unterhalb - 10 °C. Gleichzeitig ist es bevorzugt, daß dabei die Flammpunkte der Methylester enthaltenden Ölphase bei oder oberhalb etwa 70 °C und vorzugsweise bei wenigstens etwa 90 °C liegen. Flammpunkte oberhalb 100 °C und insbesondere oberhalb 150 °C können besonders geeignet sein.

Bilden die erfindungsgemäß eingesetzten Methylester in der geschlossenen Ölphase der Invert-Bohrspülungen nur einen Mischungsbestandteil, so sind als weitere Ölkomponenten praktisch beliebige vorbekannte und/oder vorbeschriebene Ölkomponenten des hier betroffenen Anwendungsgebietes geeignet. Die erfindungsgemäß vorgesehenen Methylester sind mit solchen Komponenten in der Regel in beliebigen Mischungsverhältnissen homogen mischbar.

Mögliche Mischungsbestandteile sind insbesondere Mineralöle bzw. Mineralölfraktionen, die den sogenannten nonpolluting drilling oils zugerechnet werden und in der eingangs zitierten Literatur beschrieben sind. Es handelt sich dabei in der Regel um gesättigte aliphatische und/oder cycloaliphatische Kohlenwasserstoffe vergleichsweise niederer Toxizität. Besonders wichtige Mischungskomponenten sind für die Abmischung mit Methylestern der hier betroffenen Art jedoch Carbonsäureesteröle anderer Alkohole, wobei den entsprechenden Estern monofunktioneller Alkohole besondere Bedeutung zukommen kann.

### Die bevorzugten Methylester

Bevorzugte Methylester leiten sich von Monocarbonsäuren des Bereichs von C₈₋₂₄ ab. Dabei sind zweckmäßigerweise die Methylester höherer Carbonsäuren dieses Bereichs, und zwar solche von Monocarbonsäuren mit 16 und mehr Atomen wenigstens anteilsweise olefinisch ungesättigt. Im Bereich der darunterliegenden C-Zahlen können olefinisch ungesättigte Carbonsäurereste vorliegen. Üblicherweise leitet sich hier aber die wenigstens überwiegende Menge des Methylesters von gesättigten Monocarbonsäuren ab.

In einer wichtigen Ausführungsform der Erfindung werden Methylester von Carbonsäuren eingesetzt, die dem Bereich von 16 bis 24 C-Atomen ausschließlich oder wenigstens überwiegend zuzuordnen sind. Die Carbonsäuren können sich dabei von unverzweigten oder verzweigten Kohlenwasserstoffketten ableiten, wobei den geradkettigen besondere Bedeutung zukommen kann. Monocarbonsäuren dieser Art und des hier betroffenen Bereichs von 16 bis 24 Atomen bzw. deren Methylester sind als überwiegend gesättigte Kohlenwasserstoffverbindungen aufgrund ihrer vergleichsweise hohen Erstarrungswerte ungeeignet. Ester der hier betroffenen Art sind allerdings selbst dann bis herunter zu Temperaturen im Bereich von 0 bis 5 °C fließ- und pumpfähig, wenn ein hinreichender Grad von olefinisch ungesättigten Esterbestandteilen sichergestellt ist. In der bevorzugten Ausführungsform der Erfindung werden dementsprechend Methylester der hier beschriebenen Art verwendet, die sich zu mehr als 70 Gew.-% und vorzugsweise zu mehr als 80 Gew.-% von olefinisch ungesättigten Carbonsäuren des Bereichs von C₁₆₋₂₄ ableiten. Wichtige natürliche Ausgangsmaterialien liefern Carbonsäuregemische, die zu wenigstens 90 Gew.-% olefinisch ungesättigte Carbonsäuren des hier genannten Bereichs enthalten. Die ungesättigten Carbonsäuren können dabei einfach und/oder mehrfach olefinisch ungesättigt sein. Beim Einsatz von Carbonsäuren bzw. Carbonsäuregemischen natürlichen Ursprungs spielt neben einer einfachen ethylenischen Doppelbindung im Molekül insbesondere die zweifache und im untergeordneten Maße auch noch eine dreifache ethylenische Doppelbindung je Carbonsäuremolekül eine gewisse Rolle. Im Rahmen der hier beschriebenen ungesättigten Methylester lassen sich zwei Unterklassen von besonderer Bedeutung formulieren:

Die erste dieser Unterklassen geht von ungesättigten C₁₆₋₂₄-Monocarbonsäuren aus, die zu nicht mehr als etwa 35 Gew.-% 2- und gegebenenfalls mehrfach olefinisch ungesättigt sind. Hier ist also der Gehalt an mehrfach ungesättigten Carbonsäureresten im Esteröl vergleichsweise beschränkt. Bevorzugt ist im Rahmen dieser Unterklasse dann allerdings, daß die Carbonsäurereste zu wenigstens etwa 60 Gew.-% einfach olefinisch ungesättigt sind.

In Abweichung von der zuvor geschilderten ersten Unterklasse leitet sich die zweite für die Praxis bedeutende Unterklasse von Methylestern aus solchen C₁₆₋₂₄-Monocarbonsäuregemischen ab, die sich zu mehr als 45 Gew.-% und dabei vorzugsweise zu mehr als 55 Gew.-% von 2- und/oder mehrfach olefinisch ungesättigten Säuren des genannten C-Zahlbereichs ableiten.

Die wichtigsten ethylenisch einfach ungesättigten Carbonsäuren des hier betroffenen Bereichs sind die Hexadecensäure (C₁₆), die Ölsäure (C₁₈), die ihr verwandte Ricinolsäure (C₁₈) und die Erucasäure (C₂₂). Die wichtigste zweifach ungesättigte Carbonsäure des hier betroffenen Bereichs ist die Linolsäure (C₁₈) und die wichtigste dreifach ethylenisch ungesättigte Carbonsäure die Linolensäure (C₁₈).

Als Methylesterkomponente können im erfindungsgemäßen Sinne ausgewählte Individuen dieses Estertyps eingesetzt werden. Ein Beispiel hierfür ist der Ölsäuremethylester. Für die Rheologie des Systems und/oder aus Gründen der Zugänglichkeit ist es jedoch im allgemeinen zweckmäßig, Säuregemische einzusetzen. Hier liegt Wesentliches für die Definition der beiden zuvor genannten Unterklassen bevorzugter Methylesteröle.

Die erste dieser beiden Unterklassen zeichnet sich dadurch aus, daß ihr Gehalt an 2- und mehrfach ungesättigten Säuren beschränkt ist und etwa 35 Gew.-% nicht übersteigt. Pflanzenöle natürlichen Ursprungs, die bei ihrer Verseifung bzw. Umesterung mit Methanol Gemische von Carbonsäuren bzw. Methylester der hier geforderten Art liefern, sind beispielsweise Palmöl, Erdnußöl, Ricinusöl und insbesondere Rüböl. In Betracht kommen dabei sowohl Rübölsorten mit hohem Gehalt an Erucasäure als auch die moderneren Rübölzüchtungen mit verringertem Gehalt an Erucasäure und dafür erhöhtem Ölsäuregehalt.

Methylestern auf Basis dieser Definition kann schon deswegen besondere Bedeutung zukommen, weil hier möglicherweise auftretende Probleme der Oxidationsinstabilität im praktischen Betrieb gemildert sind.

Aber auch Carbonsäuregemische der zuvor genannten zweiten Unterklasse haben sich in Form des Methylesters als äußerst wertvoll erwiesen. Sie sind im Rahmen natürlicher Fettstoffe pflanzlichen und/oder tierischen Ursprungs leicht zugänglich. Klassische Beispiele für Öle mit hohem Gehalt an Carbonsäuren des Bereichs von C₁₆₋₁₈ bzw. C₁₆₋₂₂ und gleichzeitig wenigstens etwa 45 Gew.-% an wenigstens 2-fach ethylenisch ungesättigten Carbonsäuren sind das Baumwollsaatöl, das Sojaöl, das Sonnenblumenöl und das Leinöl. Auch die bei der Zellstoffgewinnung isolierten Tallölsäuren fallen in diesen Bereich. Ein typisches tierisches Einsatzmaterial für die Gewinnung entsprechender Carbonsäuregemische ist Fischöl, insbesondere das Heringsöl.

In einer anderen aber ebenfalls besonders wichtigen Ausführungsform werden erfindungsgemäß Methylester aus wenigstens überwiegend gesättigten Monocarbonsäuren verwendet. Hier kommt besondere Bedeutung den Carbonsäuren des niedrigeren C-Zahlbereichs zu, insbesondere also Monocarbonsäuren mit 6 bis 16 C-Atomen, insbesondere mit 8 bis 16 C-Atomen und insbesondere entsprechende Verbindungen mit etwa 9 bis 15 C-Atomen. Carbonsäuren des hier betroffenen Bereichs sind sowohl aus nachwachsenden Ölen und Fetten natürlichen Ursprungs wie durch die verschiedenen bekannten Verfahren der technischen Synthese solcher Carbonsäuren zugänglich.

Möglichkeiten der technischen Synthese solcher Fettsäuren sind beispielsweise im einzelnen geschildert in Ullmann, Enzyklopädie der technischen Chemie, Band 11, Kapitel "Fettsäuren" insbesondere tabellarische Zusammenfassung auf Seite 543 (4. Auflage).

Wichtig sind in diesem Bereich der Methylester mit vergleichsweise niedrigerer C-Zahl die aus natürlichen Quellen insbesondere aus Pflanzenölen bzw. -fetten zu gewinnenden Carbonsäuren und Carbonsäuregemische. In einer wichtigen Ausführungsform werden Methylester aus im wesentlichen gesättigten aliphatischen Monocarbonsäuren des Bereichs von C₁₂₋₁₆, insbesondere des Bereichs von C₁₂₋₁₄ eingesetzt. Die Mitverwendung von Estern anderer insbesondere kürzerkettiger aliphatischer Monocarbonsäuren kann zweckmäßig sein.

Auch in dem zuletzt geschilderten Fall leiten sich die Methylester von Monocarbonsäuren mit u nverzweigten oder verzweigten Kohlenwasserstoffketten ab. Den Methylestern entsprechender geradkettiger Säuren kommt besondere Bedeutung zu. Carbonsäuren bzw. Carbonsäuregemische pflanzlichen Ursprungs mit einem überwiegenden Gehalt gesättigter Monocarbonsäuren des hier betroffenen Bereichs können beispielsweise aus nachwachsenden Triglyceriden wie Kokosöl, Palmkernöl und/oder Babassuöl gewonnen werden. Fettsäuregemische dieses Ursprungs enthalten in der Regel eine beschränkte Menge an niederen Fettsäuren (C₆₋₁₀), die im allgemeinen bei maximal etwa 15 % liegt. Weitaus überwiegend ist ihr Gehalt an C_{12/14}-Säuren, der in der Regel mindestens 50 %, üblicherweise 60 % oder mehr des Carbonsäuregemisches ausmacht. Der verbleibende untergeordnete Rest entfällt auf höhere Fettsäuren, wobei in diesem Bereich ungesättigten Komponenten eine beträchtliche Rolle zukommt.

Durch geeignete Wahl und Abmischung der Carbonsäurereste im eingesetzten Methylestergemisch ist es zunächst einmal möglich, die rheologischen Eigenschaften der Methylester selber so zu steuern und vorherzubestimmen, daß die geforderte hohe Fließ- und Pumpfähigkeit auch im Bereich niederer Temperaturen von 0 bis 5 °C erfüllt werden, ohne daß andererseits eine unerwünschte Absenkung der Flammpunkte der Ölphase in Kauf genommen werden müßte. Darüber hinausgehend hat sich aber gezeigt, daß durch Mitverwendung der Methylester eine Steuerung gerade auch der rheologischen Eigenschaften von Esterölen höherer Alkohole möglich wird, die als solche unbefriedigende Fließ- und Pumpfähigkeit insbesondere im genannten niederen Temperaturbereich besitzen. Methylester der erfindungsgemäß eingesetzten Art können ersichtlich wirkungsvolle Verdünnerfür die geschlossene Ölphase der Invert-Bohrspülungen sein. Wie bereits angegeben, werden aber nicht nur die rheologischen Daten der Bohrspülung verbessert. Ihre Stabilität gegen eine unerwünscht frühzeitige Verdickung bei der Alterung im Gebrauch wird zurückgedrängt und die Empfindlichkeit gegen den Zusatz üblicher Komponenten als Alkalireserve zum Korrosionsschutz wird herabgesetzt.

### Mischungskomponenten in der Ölphase

Zur Abmischung mit den Monocarbonsäuremethylestern geeignete Ölkomponenten sind die in der heutigen Praxis der Bohrspülungen eingesetzten Mineralöle und dabei bevorzugt im wesentlichen aromatenfreie aliphatische und/oder cycloaliphatische Kohlenwasserstofffraktionen der geforderten Fließeigenschaften. Auf den einschlägigen druckschriftlichen Stand der Technik und die auf dem Markt befindlichen Handelsprodukte wird verwiesen.

Besonders wichtige Mischungskomponenten sind allerdings im Sinne des erfindungsgemäßen Handelns umweltverträgliche Esteröle wie sie insbesondere in den genannten älteren deutschen Anmeldungen geschildert sind. Zur Vervollständigung der Erfindungsoffenbarung werden im nachfolgenden wesentliche Kenndaten solcher Ester bzw. Estergemische kurz zusammengefaßt.

In einer ersten Ausführungsform werden im Temperaturbereich von 0 bis 5 °C fließ- und pumpfähige Ester aus monofunktionellen Alkoholen mit 2 bis 12, insbesondere mit4 bis 12 C-Atomen und aliphatisch gesättigten Monocarbonsäuren mit 12 bis 16 C-Atomen oder deren Abmischung mit höchstens etwa gleichen Mengen anderer Monocarbonsäuren als Ölphase verwendet. Bevorzugt sind dabei Esteröle, die zu wenigstens etwa 60 Gew.-% - bezogen auf das jeweilige Carbonsäuregemisch - Ester aliphatischer C₁₂₋₁₄-Monocarbonsäuren sind und gewünschtenfalls zum Rest auf untergeordnete Mengen kürzerkettiger aliphatischer und/oder längerkettiger, dann insbesondere 1- und/oder mehrfach olefinisch ungesättigter Monocarbonsäuren zurückgehen. Bevorzugt werden Ester eingesetzt, die im Temperaturbereich von 0 bis 5 °C eine Brookfield(RVT)-Viskosität im Bereich nicht oberhalb 50 mPas, vorzugsweise nicht oberhalb 40 mPas und insbesondere von höchstens etwa 30 mPas besitzen. Die im Bohrschlamm eingesetzten Ester zeigen Erstarrungswerte (Fließ- und Stockpunkt) unterhalb - 10 °C, vorzugsweise unterhalb - 15 °C und besitzen dabei insbesondere Flammpunkte oberhalb 100 °C, vorzugsweise oberhalb 150 °C. Die im Ester bzw. Estergemisch vorliegenden Carbonsäuren sind wenigstens überwiegend geradkettig und dabei bevorzugt pflanzlichen Ursprungs. Sie können sich von entsprechenden Triglyceriden wie Kokosöl, Palmkernöl und/oder Babassuöl ableiten. Die Alkoholreste der eingesetzten Ester leiten sich insbesondere von geradkettigen und/oder verzweigten gesättigten Alkoholen mit vorzugsweise 4 bis 10 C-Atomen ab. Auch diese Alkoholkomponenten können pflanzlichen und/oder tierischen sprungs und dabei durch reduktive Hydrierung entsprechender Carbonsäureester gewonnen worden sein.

Die andere Klasse besonders geeigneter Esteröle leitet sich von olefinisch 1- und/oder mehrfach ungesättigten Monocarbonsäuren mit 16 bis 24 Atomen oder deren Abmischungen mit untergeordneten Mengen anderer, insbesondere gesättigter Monocarbonsäuren und monofunktionellen Alkoholen mit 2 bis 12 C-Atomen ab. Auch diese Esteröle sind im Temperaturbereich von 0 bis 5 °C fließ- und pumpfähig. Geeignet sind insbesondere Ester dieser Art, die sich zu mehr als 70 Gew.-%, vorzugsweise zu mehr 80 Gew.-% und insbesondere zu mehr als 90 Gew.-% von olefinisch ungesättigten Carbonsäuren des Bereichs von C₁₆₋₂₄ ableiten.

Auch hier liegen die Erstarrungswerte (Fließ- und Stockpunkt) unterhalb - 10°C, vorzugsweise unterhalb - 15 °C, während die Flammpunkte oberhalb 100 °C und vorzugsweise oberhalb 160 °C liegen. Die im Bohrschlamm eingesetzten Ester zeigen im Temperaturbereich von 0 bis 5 °C eine Brookfield( RVT)-Viskosität von nicht mehr als 55 mPas, vorzugsweise von nicht mehr als 45 mPas.

Bei Esterölen der hier betroffenen Art lassen sich zwei Unterklassen definieren. In der ersten leiten sich die im Ester vorliegenden ungesättigten C₁₆₋₂₄-Monocarbonsäurereste zu nicht mehr als 35 Gew.-% von 2-und mehrfach olefinisch ungesättigten Säuren ab, wobei bevorzugt wenigstens etwa 60 Gew.-% der Säurereste einfach olefinisch ungesättigt sind. In der zweiten Ausführungsform leiten sich die im Estergemisch vorliegenden C₁₆₋₂₄-Monocarbonsäuren zu mehr als 45 Gew.-%, vorzugsweise zu mehr als 55 Gew.-% von 2-und/oder mehrfach olefinisch ungesättigten Säuren ab. Im Estergemisch vorliegende gesättigte Carbonsäuren des Bereiches C_{16/18} machen zweckmäßigerweise nicht als etwa 20 Gew.-% und insbesondere nicht mehr als etwa 10 Gew.-% aus. Bevorzugt liegen gesättigte Carbonsäureester aber im Bereich niedrigerer C-Zahlen der Säurereste. Auch hier sind die vorliegenden Carbonsäurereste wenigstens überwiegend geradkettig und dabei bevorzugt pflanzlichen und/oder tierischen Ursprungs. Pflanzliche Ausgangsmaterialien sind beispielsweise Palmöl, Erdnußöl, Rizinusöl und insbesondere Rüböl. Carbonsäuren tierischen Ursprungs sind insbesondere entsprechende Gemische aus Fischölen wie Heringsöl.

In einer wichtigen weiteren Ausführungsform der Erfindung eignen sich als Mischungskomponenten auf Esterbasis aber auch die Ester entsprechender Monocarbonsäuren mit polyfunktionellen Alkoholen, wobei hier insbesondere die niederen polyfunktionellen Alkohole mit 2 und/oder 3 Hydroxylgruppen in Betracht kommen.

Die wichtigsten Vertreter dieser Klasse sind die Umsetzungsprodukte der aufgezählten Monocarbonsäuren mit Glycerin und hier insbesondere die Triglyceride. Im Rahmen der natürlichen Öle und Fette stehen solche Materialien in großer Menge und zu einem aktzeptablen Preis zur Verfügung, wobei hier als Beispiel die nachfolgenden Naturprodukte genannt seien: Kokosöl, Palmkernöl, Palmöl, Sojaöl, Erdnußöl, Rüböl, Olivenöl, Leinöl, Sonnenblumenöl und/oder Ricinusöl.

Wie bereits angegeben taucht der Gedanke, Ester dieser Art in Bohrspülungen einzusetzen in der Literatur bereits auf. Wegen der völlig unzureichenden rheologischen Eigenschaften dieser Glycerinester sind bisher für die Praxis brauchbare Invert-Bohrspülungen auf Basis dieser Einsatzmaterialien aber nicht bekanntgeworden. Die Erfindung erschließt die Möglichkeit, jetzt erstmals Glycerinester dieser Art zu einem substantiellen Bestandteil von Bohrspülungen hoher ökologischer Verträglichkeit zu machen. Die Fettsäuremethylester der erfindungsgemäß beschriebenen Artsind hochwirksame Verdünnungs- und Stabilisierungsmittel auch und gerade für solche Glycerinester, und zwar nicht nur für Materialien natürlichen Ursprungs, sondern auch für Glycerinester auf synthetischer Basis.

In Kombination mit den Esterölen polyfunktioneller Alkohole, insbesondere den Glyceriden der geschilderten Art kann der Einsatz von solchen Esterölen auf Basis der Methylester zweckmäßig sein, die sich durch hohe Strukturbeweglichkeit und Fließfähigkeit auch bei niederen Temperaturen auszeichnen. In Betracht kommen insbesondere Methylesterschnitte vergleichsweise niederer insbesondere gesättigter Monocarbonsäuren, z. B. Methylester von Carbonsäuren des Bereichs C₈ bis C₁₂ und insbesondere des Bereichs C₈₋₁₀. Esterölabmischungen im erfindungsgemäßen Sinne sind allerdings nicht auf solche Vertreter beschränkt. Auch die Methylester höherer Carbonsäuren sind wertvolle Mischungskomponenten zur Verflüssigung der Triglyceride, wobei gegebenenfalls der Anteil an Esteröl auf Methylesterbasis etwas höher zu wählen ist als bei den zuvor genannten niederen Methylestern, um zu befriedigenden rheologischen Daten auch im niedrigen Temperaturbereich zu kommen.

In den Rahmen der Erfindung fallen weiterhin Mehrstoffgemische, die zusammen mit den Esterölen auf Basis der erfindungsgemäßen Methylester mehrere der hier im einzelnen äufgezählten Mischungskomponenten enthalten können. Dabei sind grundsätzlich beliebige Abmischungen verwendbar, soweit sie die rheologischen Grundforderungen für Invert-Bohrspülungen der hier betroffenen Art erfüllen. Als Beispiele für solche Mehrkomponentengemische seien Materialien auf Basis verschiedener Typen an Esterölen oder aber zusätzlich Mineralöl enthaltende Stoffmischungen genannt.

### Die Mischungsverhältnisse in der Ölphase

Es hat sich überraschenderweise gezeigt, daß schon vergleichsweise geringe Mengen an Methylesteröl der erfindungsgemäß eingesetzten Art einerseits zu einer substantiellen Verbesserung der rheologischen Eigenschaften der Bohrspülung sowie andererseits zu einer Verbesserung der Alterungsbeständigkeit und Absenkung der Empfindlichkeit gegenüber Zusatz von Alkali zur Bohrspülung führen. So können beispielsweise gebrauchsfähige Bohrspülungen unter Mitverwendung überwiegender Mengen an Esterölen auf Basis von natürlichen und/oder synthetischen Triglyceriden erhalten werden, wenn Esterölgemische eingesetzt werden, deren Gehalt an Methylester im Bereich von etwa 15 bis 50 Gew.-%, insbesondere im Bereich von etwa 15 bis 30 Gew.-% liegt. Auch die Alterungsbeständigkeit und Beständigkeit gegenüber Zusatz von Alkalireserven der Esteröle auf Basis von monofunktionellen Alkoholen mit wenigstens 2 C-Atomen werden durch die Mitverwendung vergleichsweise beschränkter Mengen an Methylester substantiell verbessert

Wie bereits angegeben ist die Erfindung jedoch nicht auf den Einsatz der Methylesteröle in solchen untergeordneten Mengen eingeschränkt. Die Methylester können den überwiegenden Anteil der kontinuierlichen Ölphase ausmachen oder auch ausschließlich diese Ölphase bilden. In der zahlenmäßigen Bestimmung kann damit der Methylester 10 bis 100 Gew.-% der geschlossenen Ölphase bilden, solange die rheologischen Grunderfordernisse für die Invert-Spülung erfüllt sind.

### Weitere Mischungskomponenten der Invert-Bohrspülung

In Betracht kommen hier alle üblichen Mischungsbestandteile zur Konditionierung und für den praktischen Einsatz der Invert-Bohrspülschlämme, wie sie nach der heutigen Praxis mit Mineralölen als geschlossene Ölphase zur Verwendung kommen. Neben der dispersen wäßrigen Phase kommen hier insbesondere Emulgatoren, Beschwerungsmittel, fluid-loss-Additive, Viskositätsbildner und Alkalireserven in Betracht.

In einer besonders wichtigen Ausführungsform der Erfindung wird auch hier Gebrauch gemacht von der Weiterentwicklung solcher Invert-Bohrspülungen auf Esterölbasis, die Gegenstand der älteren deutschen Anmeldung P39·03· 785.1 "Olephile basische Aminverbindungen als Additiv in Invert-Bohrspülschlämmen") der Anmelderin ist.

Die Lehre dieser älteren Anmeldung geht von dem Konzept aus, in Invert-Bohrspülungen auf Basis von Esterölen ein zusätzliches Additiv mitzuverwenden, das geeignet ist, die erwünschten rheologischen Daten der Bohrspülung im geforderten Bereich auch dann zu halten, wenn im Gebrauch zunehmend größere Mengen an freien Carbonsäuren durch partielle Esterhydrolyse gebildet werden. Diese freiwerdenden Carbonsäuren sollen nicht nur in einer unschädlichen Form abgefangen werden, es soll darüber hinaus möglich sein, diese freien Carbonsäuren gewünschtenfalls zu wertvollen Komponenten mit stabilisierenden bzw. emulgierenden Eigenschaften für das Gesamtsystem umzuwandeln. Vorgesehen ist nach dieser Lehre die Mitverwendung von basischen und zur Salzbildung mit Carbonsäuren befähigten Aminverbindungen ausgeprägt oleophiler Natur und höchstens beschränkter Wasserlöslichkeit als Additiv in der Ölphase. Die oleophilen Aminverbindungen können gleichzeitig anteilsweise als Alkalireserve der Invert-Bohrspülung zusammen mit Kalk eingesetzt werden. Bevorzugt ist die Verwendung von oleophilen Aminverbindungen, die wenigstens überwiegend frei sind von aromatischen Bestandteilen. In Betracht kommen insbesondere gegebenenfalls olefinisch ungesättigte aliphatische, cycloaliphatische und/oder heterocyclische oleophile basische Aminverbindungen, die eine oder auch mehrere mit Carbonsäuren zur Salzbildung befähigte N-Gruppierungen enthalten. Die Wasserlöslichkeit bei Raumtemperatur dieser Aminverbindungen beträgt in einer bevorzugten Ausführungsform höchstens etwa 5 Gew.-% und liegt zweckmäßigerweise unter 1 Gew.-%.

Typische Beispiele für solche Aminverbindungen sind wenigstens weitgehend wasserunlösliche primäre, sekundäre und/oder tertiäre Amine, die auch beschränkt alkoxyliert und/oder mit insbesondere Hydroxylgruppen substituiert sein können. Weitere Beispiele sind entsprechende Aminoamide und/oder Stickstoff als Ringbestandteil enthaltende Heterocyclen. Geeignet sind beispielsweise basische Aminverbindungen, die wenigstens einen langkettigen Kohlenwasserstoffrest mit bevorzugt 8 bis 36 Atomen, insebesondere mit 10 bis 24 C-Atomen aufweisen, derauch 1- oder mehrfach olefinisch ungesättigt sein kann. Die oleophilen basischen Aminverbindungen können der Bohrspülung in Mengen bis zu etwa 10 lb/bbl, vorzugsweise in Mengen bis zu etwa 5 lb/bbl und insbesondere im Bereich von etwa 0,1 bis 2 lb/bbl zugesetzt werden.

Es hat sich gezeigt, daß die Mitverwendung solcher oleophiler basischer Aminverbindungen Verdickungen des Spülsystems wirkungsvoll verhindern kann, die vermutlich auf eine Störung des W/O-Invertsystems zurückzuführen und auf die Entstehung freier Carbonsäuren durch Esterhydrolyse zurückzuführen sind. Wenn auch die im Rahmen der vorliegenden Erfindung geschilderte Mitverwendung bzw. Verwendung von Esterölen auf Methylesterbasis bereits eine substantielle Abhilfe gegen unerwünschte Eindickungen der Invert-Bohrspülungen mit sich bringt, so ist gleichwohl die Kombination mit der Lehre der genannten älteren Anmeldung eine wichtige Ausführungsform der hier geschilderten Erfindung.

Weiterhin gilt das folgende:

Invert-Bohrspülschlämme der hier betroffenen Art enthalten üblicherweise zusammen mit der geschlossenen Ölphase die feindisperse wäßrige Phase in Mengen von etwa 5 bis 45 Gew.-% und vorzugsweise in Mengen von etwa 5 bis 25 Gew.-%. Dem Bereich von etwa 10 bis 25 Gew.-% an disperser wäßriger Phase kann besondere Bedeutung zukommen.

Für die Rheologie bevorzugter Invert-Bohrspülungen im Sinne der Erfindung gelten die folgenden rheologischen Daten: Plastische Viskosität (PV) im Bereich von etwa 10 bis 60 mPas, bevorzugt von etwa 15 bis 40 mPas, Fließgrenze (Yield Point YP) im Bereich von etwa 5 bis 40 lb/100 ft², bevorzugt von etwa 10 bis 25 lb/100 ft² - jeweils bestimmt bei 50 °C. Für die Bestimmung dieser Parameter, für die dabei eingesetzten Meßmethoden sowie für die im übrigen übliche Zusammensetzung der hier beschriebenen Invert-Bohrspülungen gelten im einzelnen die Angaben des Standes der Technik, die eingangs zitiert wurden und ausführlich beispielsweise beschrieben sind in dem Handbuch "Manual Of Drilling Fluids Technology" der Firma NL-Baroid, London, GB, dort insbesondere unter Kapitel "Mud Testing - Tools and Techniques" sowie "Oil Mud Technology", das der interessierten Fachwelt frei zugänglich ist. Zusammenfassend kann hier zum Zwecke der Vervollständigung der Erfindungsoffenbarung das folgende gesagt werden:

Für die Praxis brauchbare Emulgatoren sind Systeme, die zur Ausbildung der geforderten W/O-Emulsionen geeignet sind. In Betracht kommen insbesondere ausgewählte oleophile Fettsäuresalze, beispielsweise solche auf Basis von Amidoaminverbindungen. Beispiele hierfür werden in der bereits zitierten US-A-4,374,737 und der dort zitierten Literatur beschrieben. Ein besonders geeigneter Emulgatortyp ist das von der Firma NL Baroid unter dem Handelsnamen "EZ-mul" vertriebene Produkt.

Emulatoren der hier betroffenen Art werden im Handel als hochkonzentrierte Wirkstoffaufbereitungen vertrieben und können beispielsweise in Mengen von etwa 2,5 bis 5 Gew.-%, insbesondere in Mengen von etwa 3 bis 4 Gew.-% - jeweils bezogen auf Esterölphase - Verwendung finden.

Als fluid-loss-Additiv und damit insbesondere zur Ausbildung einer dichten Belegung der Bohrwandungen mit einem weitgehend flüssigkeitsundurchlässigen Film wird in der Praxis insbesondere hydrophobierter Lignit eingesetzt. Geeignete Mengen liegen beispielsweise im Bereich von etwa 15 bis 20 lb/bbl oder im Bereich von etwa 5 bis 7 Gew.-% - bezogen auf die Esterölphase.

In Bohrspülungen der hier betroffenen Art ist der üblicherweise eingesetzte Viskositätsbildner ein kationisch modifizierter feinteiliger Bentonit, der insbesondere in Mengen von etwa 8 bis 10 lb/bbl oder im Bereich von etwa 2 bis 4 Gew.-%, bezogen auf Esterölphase, verwendet werden kann. Das in der einschlägigen Praxis üblicherweise eingesetzte Beschwerungsmittel zur Einstellung des erforderlichen Druckausgleiches ist Baryt, dessen Zusatzmengen den jeweils zu erwartenden Bedingungen der Bohrung angepaßt wird. Es ist beispielsweise möglich, durch Zusatz von Baryt das spezifische Gewicht der Bohrspülung auf Werte im Bereich bis etwa 2,5 und vorzugsweise im Bereich von etwa 1,3 bis 1,6 zu erhöhen.

Die disperse wäßrige Phase wird in Invert-Bohrspülungen der hier betroffenen Art mit löslichen Salzen beladen. Überwiegend kommt hier Calciumchlorid und/oder Kaliumchlorid zum Einsatz, wobei die Sättigung der wäßrigen Phase bei Raumtemperatur mit dem löslichen Salz bevorzugt ist.

Die zuvor erwähnten Emulgatoren bzw. Emulgatorsysteme dienen gegebenenfalls auch dazu, die Ölbenetzbarkeit der anorganischen Beschwerungsmaterialien zu verbessern. Neben den bereits genannten Aminoamiden sind als weitere Beispiele Alkylbenzolsulfonate sowie Imidazolinverbindungen zu nenen. Zusätzliche Angaben zum einschlägigen Stand der Technik finden sich in den folgenden Literaturstellen: GB-A-2 158 437, EP-A-229 912 und DE-A-32 47 123.

Die erfindungsgemäß auf der Mitverwendung von Esterölen der geschilderten Art aufgebauten Bohrspülftüssigkeiten zeichnen sich zusätzlich zu den bereits geschilderten Vorteilen auch durch eine deutlich verbesserte Schmierfähigkeit aus. Wichtig ist das insbesondere dann, wenn bei Bohrungen beispielsweise in größeren Tiefen der Gang des Bohrgestänges und damit auch das Bohrloch Abweichungen von der Senkrechten aufweisen. Das rotierende Bohrgestänge kommt hier leicht mit der Bohrlochwand in Kontakt und gräbt sich im Betrieb in diese ein. Esteröle der erfindungsgemäß als Ölphase eingesetzten Art besitzen eine deutlich bessere Schmierwirkung als die bisher verwendeten Mineralöle. Hier liegt ein weiterer wichtiger Vorteil für das erfindungsgemäße Handeln.

### Beispiele

In den nachfolgenden Beispielen werden Invert-Bohrspülungen in konventioneller Weise unter Benutzung der folgenden Rahmenrezeptur hergestellt:

| | |
|---|---|
| 230 ml | Esteröl |
| 26 ml | Wasser |
| 6 g | organophiler Bentonit (Geltone II der Fa. NL Baroid) |
| 6 g | organophiler Lignit (Duratone der Fa. NL Baroid) |
| 2 g | Kalk |
| 6 g | W/O-Emulgator (EZ-mul NT der Fa. NL Baroid) |
| 346 g | Baryt |
| 9,2 g | CaCl₂ x 2 H₂O |

In dieser Rezeptur entsprechen etwa 1,35 g Kalk dem Wert von 2 lb/bbl.

Nachdem in an sich bekannter Weise aus den jeweils eingesetzten Komponenten unter Variation der Esterölphase eine W/O-Invert-Bohrspülung zusammengestellt worden ist, werden zunächst am ungealterten und dann am gealterten Material die Viskositätskennwerte wie folgt bestimmt:

Messung der Viskosität bei 50 °C in einem Fann-35-Viskosimeter der Fa. NL Baroid. Es werden in an sich bekannter Weise bestimmt die Plastische Viskosität (PV), die Fließgrenze (YP) sowie die Gelstärke (lb/100 ft²) nach 10 sec. und 10 min.

Die Alterung erfolgt durch Behandlung im Autoklaven - im sogenannten Roller-oven - für den Zeitraum von 48 Stunden (Beispiele 1 bis 3) bzw. für 24 Stunden (Beispiele 4, 5 und Vergleichsbeispiel) bei 125 °C.

### Beispiel 1

Als Esteröl wird ein Rübölfettsäuremethylester mit den folgenden Kennzahlen eingesetzt: Säurezahl (max.) 1; Verseifungszahl 187 bis 197; Jodzahl 100 bis 115; Kettenverteilung der Carbonsäurereste: C₁₆ 5 bis 10, C₁₈ 1 bis 3, C₁₈, 54 bis 62, C_{18"} 17 bis 23 und C_{18"}, 7 bis 12, C_{20'} 1 bis 4, zum Rest verschiedene Säuren des Bereichs C₁₂ bis C₂₂ in Spuren.

Die am ungealterten und am gealterten Material bestimmten Kennzahlen sind in der nachfolgenden tabellarischen Zusammenfassung aufgeführt

| | ungealtertes Material | gealtertes Material |
|---|---|---|
| Plastische Viskosität (PV) | 21 | 25 |
| Fließgrenze (YP) | 6 | 6 |
| Gelstärke (lb/100 ft²) | | |
| 10 sec. | 6 | 7 |
| 10 min. | 9 | 9 |

### Beispiel 2

Als Esterölphase wird Sojaölfettsäuremethylester der folgenden Kenndaten eingesetzt: Säurezahl (max.) 1, Verseifungszahl 189 bis 195; Jodzahl 115 bis 135; Kettenverteilung der Carbonsäurereste: C₁₆ 8 bis 13, C₁₈ 3 bis 6, C_{18'} 23 bis 30, C_{18"} 40 bis 50 und C_{18"}, 4 bis 12, zum Rest Monocarbonsäuren des Bereichs von C₁₀ bis C₂₂ in Spuren.

Die am ungealterten und gealterten Material bestimmten Kennzahlen sind in der nachfolgenden tabellarischen Zusammenfassung aufgeführt

| | ungealtertes Material | gealtertes Material |
|---|---|---|
| Plastische Viskosität (PV) | 19 | 23 |
| Fließgrenze (YP) Gelstärke (lb/100 ft²) | 11 | 6 |
| 10 sec. | 7 | 6 |
| 10 min. | 7 | 7 |

### Beispiel 3

Als Esterölphase wird technischer Ölsäuremethylester der folgenden Kenndaten eingesetzt: Säurezahl (max.) 1, Verseifungszahl 192 bis 197; Jodzahl 84 bis 92; Kettenverteilung der Carbonsäurereste: C₁₄ 2 bis 5, C₁₆ 4 bis 6, C_{16'} 4 bis 6, C₁₇ 1 bis 3, C₁₈ 1 bis 3, C_{18'} 63 bis 73, C_{18''} 7 bis 12, zum Rest verschiedene Carbonsäuren des Bereichs bis C₂₂.

Die am ungealterten und gealterten Material bestimmten Kennzahlen sind in der nachfolgenden tabellarischen Zusammenfassung aufgeführt

| | ungealtertes Material | gealtertes Material |
|---|---|---|
| Plastische Viskosität (PV) | 21 | 23 |
| Fließgrenze (YP) | 6 | 6 |
| Gelstärke (lb/100 ft²) | | |
| 10 sec. | 5 | 7 |
| 10 min. | 7 | 9 |

In den nachfolgenden Beispielen 4 und 5 werden Abmischungen eines Vorlauffettsäuremethylesters (Ket tenlänge der gesättigten Carbonsäurereste C₆₋₁₂) mit einem undestillierten Isobutyl-Rübölester als geschlossene Ölphase eingesetzt. Dieser Isobutyl-Rübölester basiert auf einer Mischung überwiegend ungesättigter geradkettiger Carbonsäuren, die etwa der folgenden Verteilung entsprechen: 60 % Ölsäure, 20 % Linolsäure, 9 bis 10 % Linolensäure, olefinisch ungesättigte C_{20/22}-Monocarbonsäuren etwa 4 %, zum Rest gesättigte Monocarbonsäuren überwiegend des Bereichs C_{16/18}.

Der eingesetzte Rübölester besitzt weiterhin die folgenden Kenndaten: Dichte (20 °C) 0,872 g/cm³; Fließpunkt unterhalb - 15 °C; Flammpunkt (DIN 51584) oberhalb 180 °C; Säurezahl (DGF-CV2) 1,2; Viskosität bei 0 °C 32 mPas, Viskosität bei 5 °C 24 mPas; kein Gehalt an Aromaten.

Die Kennzahlen des Vorlauffettsäure-methylesters sind die folgenden: Verseifungszahl 320 bis 325, Jodzahl maximal 1, Fließpunkt - 28 °C, Kettenlängenverteilung C₆ 3 bis 8, C₈ 50 bis 60, C₁₀ 30 bis 40, C₁₂ 1 bis 5.

Es werden in den Beispielen 4 und 5 jeweils Verschnitte von 20 Gew.-% des Vorlauffettsäuremethylesters mit 80 Gew.-% des Isobutyl-Rübölesters eingesetzt. In Beispiel 4 wird als Alkalireserve in der eingangs angegebenen Rahmenrezeptur nur 1 g Kalk verwendet. Das Beispiel 5 verwendet zum Vergleich 2 g Kalk als Alkalireserve.

Es werden die folgenden Werte bestimmt:

### Beispiel 4

| | ungealtertes Material | gealtertes Material |
|---|---|---|
| Plastische Viskosität (PV) | 21 | 23 |
| Fließgrenze (YP) | 8 | 6 |
| Gelstärke (lb/100 ft²) | | |
| 10 sec. | 6 | 5 |
| 10 min. | 8 | 7 |

### Beispiel 5

| | ungealtertes Material | gealtertes Material |
|---|---|---|
| Plastische Viskosität (PV) | 24 | 24 |
| Fließgrenze (YP) | 9 | 6 |
| Gelstärke (lb/100 ft²) | | |
| 10 sec. | 8 | 5 |
| 10 min. | 11 | 7 |

In diesen Beispielen 4 und 5 wurde die Alterung für den Zeitraum von 24 Stunden bei 125 °C durchgeführt.

### Vergleichsbeispiel

Zum Vergleich wird der Isobutyl-Rübölester unter Zusatz von 1 g Kalk in der eingangs angegebenen Rahmenrezeptur als Ölphase verwendet. Die rheologischen Daten werden am ungealterten und gealterten (24 Stunden bei 125 °C) Material bestimmt. Die eingesetzte Kalkmenge liegt in diesem Ansatz unter dem in der älteren deutschen Anmeldung P38·42·659.5 angegebenen Grenzwert von 2 lb/bbl.

Es werden die folgenden Kennzahlen bestimmt:

| | ungealtertes Material | gealtertes Material |
|---|---|---|
| Plastische Viskosität (PV) | 27 | 28 |
| Fließgrenze (YP) | 10 | 18 |
| Gelstärke (lb/100 ft²) | | |
| 10 sec. | 6 | 7 |
| 10 min. | 8 | 8 |

## Patentansprüche

1. Verwendung der Methylester von Monocarbonsäuren des Bereichs C₆₋₂₄ als Ölphase oder Bestandteil der Ölphase in Mengen von 10 bis 100 Gew.-%, bezogen auf die Ölphase, von Invert-Bohrspülschlämmen, die für eine umweltschonende Erschließung von Erdöl- bzw. Erdgasvorkommen geeignet sind und in einer geschlossenen Ölphase eine disperse wäßrige Phase zusammen mit Kalk als Alkalireserve Emulgatoren, Beschwerungsmitteln, fluid-loss-Additiven und gewünschtenfalls weiteren üblichen Zusatzstoffen enthalten.

2. Ausführungsform nach Anspruch 1, **dadurch gekennzeichnet, daß** Monocarbonsäuremethylester oder Gemische solcher Methylester verwendet werden, die bei Raumtemperatur und insbesondere auch im Temperaturbereich von 0 bis 5 °C fließ- und pumpfähig sind.

3. Ausführungsform nach Ansprüchen 1 und 2, **dadurch gekennzeichnet, daß** als Ölphase Methylester oder Mischungen von Methylestern und nonpolluting oils verwendet werden, die im Temperaturbereich von 0 bis 5 °C eine Brookfield(RVT)-Viskosität nicht oberhalb 50 mPas, vorzugsweise nicht oberhalb 40 mPas und höchstens von etwa 30 mPas aufweisen.

4. Ausführungsform nach Ansprüchen 1 bis 3, **dadurch gekennzeichnet, daß** die im Bohrschlamm eingesetzten Methylester bwz. Methylestergemische Erstarrungswerte (Fließ- und Stockpunkt) unterhalb 0 °C, vorzugsweise unterhalb -5 °C und insbesondere unterhalb -10 °C und dabei Flammpunkte von wenigstens etwa 70 °C vorzugsweise oberhalb 90 °C aufweisen.

5. Ausführungsform nach Ansprüchen 1 bis 4, **dadurch gekennzeichnet, daß** bei Methylester enthaltenden Ölabmischungen in der Ölphase als weitere Ölkomponenten Kohlenwasserstoff-bohröle niederer Toxizität und/oder Carbonsäureesteröle anderer Alkohole verwendet werden, wobei hier Ester monofunktioneller und/oder niederer mehrfunktioneller Alkohole besonders bevorzugt sind und wobei als solche Ester mehrfunktioneller Alkohole insbesondere Glycerinester natürlichen oder synthetischen Ursprungs in betracht kommen.

6. Ausführungsform nach Ansprüchen 1 bis 5, **dadurch gekennzeichnet, daß** Methylester von Monocarbonsäuren des Bereichs von C₈₋₂₄ eingesetzt werden, wobei im Bereich der Carbonsäuren mit 16 und mehr Atomen wenigstens anteilsweise olefinisch ungesättigte Methylester bevorzugt sind, während im Bereich der darunter liegenden C-Zahlen olefinisch ungesättigte Carbonsäurereste vorliegen können, üblicherweise aber sich hier die Methylester von gesättigten Monocarbonsäuren ableiten.

7. Ausführungsform nach Ansprüchen 1 bis 6, **dadurch gekennzeichnet, daß** sich die im Methylester vorliegenden ungesättigten C₁₆₋₂₄-Monocarbonsäurereste zu nicht mehr als 35 Gew.-% von 2- und mehrfach olefinisch ungesättigten Säuren ableiten und dabei bevorzugt zu wenigstens etwa 60 Gew.-% 1-fach olefinisch ungesättigt sind und/oder daß sich diese im Estergemisch vorliegenden C₁₆₋₂₄-Monocarbonsäurereste zu mehr als 45 Gew.-%, vorzugsweise zu mehr als 55 Gew.-% von 2- und/oder mehrfach olefinisch ungesättigten Säuren ableiten.

8. Ausführungsform nach Ansprüchen 1 bis 7, **dadurch gekennzeichnet, daß** im Methylestergemisch vorliegende gesättigte Carbonsäuren im Bereich C_{16/18} nicht mehr als etwa 20 Gew.-% und insbesondere nicht mehr als etwa 10 Gew.-% ausmachen, bevorzugt aber im Bereich niedrigerer C-Zahlen liegen.

9. Ausführungsform nach Ansprüchen 1 bis 8, **dadurch gekennzeichnet, daß** als Mischungskomponenten auf Esterbasis in der geschlossenen Ölphase Esteröle aus monofunktionellen Alkoholen mit 2 bis 12, vorzugsweise4 bis 10 C-Atomen und olefinisch 1 - und/oder mehrfach ungesättigten Monocarbonsäuren mit 16 bis 24 Atomen vorliegen, die vorzugsweise ihrerseits bereits Erstarrungswerte ( Fließ- und Stockpunkt) unterhalb - 10 °C, vorzugsweise unterhalb - 15 °C und dabei Flammpunkte oberhalb 100 °C, vorzugsweise oberhalb 150 °C aufweisen.

10. Ausführungsform nach Anspruch 9, **dadurch gekennzeichnet, daß** zusammen mit den Methylestern als Mischungskomponente olefinisch ungesättigte Carbonsäureester eingesetzt werden, die sich zu mehr als 70 Gew.-%, vorzugsweise zu mehr als 80 Gew.-% und insbesondere zu mehr als 90 Gew.-% von olefinisch ungesättigten Carbonsäuren des Bereichs von C₁₆₋₂₄ ableiten und dabei insbesondere im Temperaturbereich von 0 bis 5 °C eine Brookfield(RVT)-Viskosität von nicht mehr als 55 mPas, vorzugsweise von nicht mehr als 45 mPas besitzen.

11. Ausführungsform nach Ansprüchen 9 und 10, **dadurch gekennzeichnet, daß** sich die als Mischungskomponenten eingesetzten Ester ungesättigter Monocarbonsäuren zu nicht mehr als 35 Gew.-% von 2- und mehrfach olefinisch ungesättigten Säuren, die zu wenigstens etwa 60 Gew.-% 1-fach olefinisch ungesättigt sind, und/oder zu mehr als 45 Gew.-%, vorzugsweise zu mehr als 55 Gew.-% von 2- und/oder mehrfach olefinisch ungesättigten Säuren ableiten.

12. Ausführungsform nach Ansprüchen 1 bis 8, **dadurch gekennzeichnet, daß** die Methylester zusammen mit Estern aus monofunktionellen Alkoholen mit 2 bis 12, insbesondere 4 bis 12 C-Atomen und aliphatischen gesättigten Monocarbonsäuren mit bis zu 16 C-Atomen, bevorzugt überwiegend mit 12 bis 14 C-Atomen verwendet werden.

13. Ausführungsform nach Ansprüchen 1 bis 12, **dadurch gekennzeichnet, daß** Methylester von Carbonsäuren natürlichen insbesondere pflanzlichen Ursprungs und/oder Methylester synthetischer Carbonsäuren verwendet werden.

14. Ausführungsform nach Ansprüchen 1 bis 13, **dadurch gekennzeichnet, daß** die Methylester in den Invert-Bohrschlämmen zusammen mit zur Salzbildung mit freien Carbonsäuren befähigten Aminverbindungen ausgeprägt oleophiler Natur und höchstens beschränkter Wasserlöslichkeit zum Einsatz kommen.

15. Ausführungsform nach Ansprüchen 1 bis 14, **dadurch gekennzeichnet, daß** die Methylester als Verdünnungsmittel und zur Verbesserung der rheologischen Eigenschaften der Ölphase insbesondere im Temperaturbereich von 0 bis 5 °C und/oder zur Verminderung der Alkalisensibilität der Ölspülung beim Altern verwendet werden.

16. Ausführungsform nach Ansprüchen 1 bis 15, **dadurch gekennzeichnet, daß** die Ester in Bohrspülungen zum Einsatz kommen, die im Invert-Bohrspülschlamm zusammen mit der geschlossenen Ölphase auf Esterbasis die fein-disperse wäßrige Phase in Mengen von etwa 5 bis 45 Gew.-%, vorzugsweise in Mengen von etwa 5 bis 25 Gew.-% enthalten.

17. Invert-Bohrspülungen, die für eine umweltfreundliche Erschließung von Erdöl- bzw. Erdgasvo ommen geeignet sind und in einer geschlossenen Ölphase eine disperse wäßrige Phase zusammen mit Kalk als Alkalireserve Emulgatoren, Beschwerungsmitteln, fluid-loss-Additiven und gewünschtenfalls weiteren üblichen Zusatzstoffen enthalten, **dadurch gekennzeichnet, daß** die Ölphase Methylester von Monocarbonsäuren mit 6 bis 24 C-Atomen in Mengen von 10 bis 100 Gew.-%, bezogen auf die Ölphase, gewünschtenfalls in Abmischung mit anderen Ölkomponenten aus der Klasse der nonpolluting oils enthält.

18. Invert-Bohrspülungen nach Anspruch 17, **dadurch gekennzeichnet, daß** die Ölphase ausgewählte Methylester oder Methylestergemische in Mengen von wenigstens etwa 10 Gew.-% - bezogen auf Ölphase - enthält.

19. Invert-Bohrspülungen nach Ansprüchen 17 und 18, **dadurch gekennzeichnet, daß** zusammen mit den Methylestern Ester anderer, vorzugsweise monofunktioneller und/oder niederer mehrfunktioneller Alkohole mit Monocarbonsäuren wenigstens den Hauptanteil der Ölphase ausmachen, wobei als mehrfunktionelle Ester insbesondere Triglyceride natürlichen und/oder synthetischen Ursprungs vorliegen können.

20. Invert-Bohrspülung nach Ansprüchen 17 bis 19, **dadurch gekennzeichnet, daß** sie eine Plastische Viskosität (PV) im Bereich von etwa 10 bis 60 mPas und eine Fließgrenze (Yield Point YP) im Bereich von etwa 5 bis 40 lb/100 ft² - jeweils bestimmt bei 50 °C - aufweist.

21. Invert-Bohrspülung nach Ansprüchen 17 bis 20, **dadurch gekennzeichnet, daß** ihr disperser Wasseranteil etwa 5 bis 45 Gew.-%, bevorzugt etwa 10 bis 25 Gew.-% ausmacht und insbesondere Salze von der Art CaCl₂ und/oder KCl gelöst enthält.

22. Invert-Bohrspülung nach Ansprüchen 12 bis 21, **dadurch gekennzeichnet, daß** die Ölphase des Invertschlamms im Temperaturbereich von 0 bis 5 °C eine Brookfield(RVT)- Viskosität unterhalb 50 mPas, vorzugsweise nicht über 40 mPas aufweist.

## Claims

1. The use of the methylesters of C₆₋₂₄ monocarboxylic acids as the oil phase or as part of the oil phase of invert drilling muds which are suitable for the environment-friendly development of oil and gas sources and which, in a continuous oil phase, contain a disperse aqueous phase together with lime as alkali reserve, emulsifiers, weighting agents, fluid loss additives and, if desired, other typical additives.

2. The use claimed in claim 1, **characterized in that** monocarboxylic acid methylesters which are liquid and pumpable at room temperature and, in particular, even at temperatures of 0 to 5°C, or mixtures thereof, are used.

3. The use claimed in claims 1 and 2, **characterized in that** methylesters or mixtures of methylesters and nonpolluting oils which have a Brookfield (RVT) viscosity at 0 to 5°C of no more than 50 mPa.s, preferably no more than 40 mPa.s and, at most, approximately 30 mPa.s are used as the oil phase.

4. The use claimed in claims 1 to 3, **characterized in that** the methylesters or methylester mixtures used in the drilling mud have solidification values (pour point and setting point) below 0°C, preferably below -5°C and, more preferably, below -10°C and flash points of at least about 70°C and preferably above 90°C.

5. The use claimed in claims 1 to 4, **characterized in that**, in the case of methylester-containing oil mixtures, low-toxicity hydrocarbon drilling oils and/or carboxylic acid ester oils of other alcohols are used as further oil components in the oil phase, esters of monofunctional and/ or lower monofunctional alcohols being particularly preferred and glycerol esters of natural or synthetic origin being particularly suitable as esters of polyfunctional alcohols.

6. The use claimed in claims 1 to 5, **characterized in that** methylesters of C₈₋₂₄ monocarboxylic acids are used; in the range of carboxylic acids containing 16 and more carbon atoms, at least partly olefinically unsaturated methylesters are preferred whereas the shorter C chain length range may include olefinically unsaturated carboxylic acid residues, although in this case the methylesters are typically derived from saturated monocarboxylic acids.

7. The use claimed in claims 1 to 6, **characterized in that** no more than 35% by weight of the unsaturated C₁₆₋₂₄ monocarboxylic acid residues present in the methylester are derived from di- and polyolefinically unsaturated acids, at least about 60% by weight preferably being monoolefinically unsaturated, and/or **in that** more than 45% by weight and preferably more than 55% by weight of the C₁₆₋₂₄ monocarboxylic acid residues present in the ester mixture are derived from di- and/or polyolefinically unsaturated acids.

8. The use claimed in claims 1 to 7, **characterized in that** saturated C₁₆₋₁₈ carboxylic acids present in the methylester mixture make up no more than about 20% by weight and, in particular, no more than about 10% by weight, but are preferably in the shorter C chain length range.

9. The use claimed in claims 1 to 8, **characterized in that** ester oils of monofunctional C₂₋₁₂ and preferably C₄₋₁₀ alcohols and olefinically mono- and polyunsaturated monocarboxylic acids containing 16 to 24 C atoms, which preferably have solidification values (pour point and setting point) below -10°C and preferably below -15°C and flash points above 100°C and preferably above 150°C, are present as ester-based mixture components in the continuous oil phase.

10. The use claimed in claim 9, **characterized in that** olefinically unsaturated carboxylic acid esters of which more than 70% by weight, preferably more than 80% by weight and more preferably more than 90% by weight are derived from olefinically unsaturated C₁₆₋₂₄ carboxylic acids and which have a Brookfield (RVT) viscosity at 0 to 5°C of no more than 55 mPa.s and preferably of no more than 45 mPa.s are used together with the methylesters as mixture component.

11. The use claimed in claims 9 and 10, **characterized in that**, of the esters of unsaturated monocarboxylic acids used as mixture components, no more than 35% by weight are derived from di- and polyolefinically unsaturated acids, of which at least about 60% by weight are monoolefinically unsaturated, and/or more than 45% by weight and preferably more than 55% by weight are derived from di- and/or polyolefinically unsaturated acids.

12. The use claimed in claims 1 to 8, **characterized in that** the methylesters are used together with esters of monofunctional C₂₋₁₂ and, in particular, C₄₋₁₂ monofunctional alcohols and aliphatic, saturated monocarboxylic acids containing up to 16 carbon atoms and, preferably, predominantly from 12 to 14 carbon atoms.

13. The use claimed in claims 1 to 12, **characterized in that** the methylesters of carboxylic acids of natural and, in particular, vegetable origin and/or methylesters of synthetic carboxylic acids are used.

14. The use claimed in claims 1 to 13, **characterized in that** the methylesters are used in the invert drilling muds together with amine compounds of pronounced oleophilic character and at most limited solubility in water which are capable of forming salts with free carboxylic acids.

15. The use claimed in claims 1 to 14, **characterized in that** the methylesters are used as diluents and for improving the rheological properties of the oil phase, particularly at temperatures of 0 to 5°C, and/or for reducing the sensitivity of the oil mud to alkalis during ageing.

16. The use claimed in claims 1 to 15, **characterized in that** the esters are used in drilling muds which, in the invert drilling mud, contain the finely disperse aqueous phase together with the ester-based continuous oil phase in quantities of from about 5 to 45% by weight and preferably in quantities of from about 5 to 25% by weight.

17. Invert drilling muds which are suitable for the environment-friendly development of oil and gas sources and which, in a continuous oil phase, contain a disperse aqueous phase together with lime as alkali reserve, emulsifiers, weighting agents, fluid loss additives and, if desired, other standard additives, **characterized in that** the oil phase contains methylesters of C₆₋₂₄ monocarboxylic acids, if desired in admixture with other oil components from the class of nonpolluting oils.

18. An invert drilling mud as claimed in claim 17, **characterized in that** the oil phase contains selected methylesters or methylester mixtures in quantities of at least about 10% by weight, based on oil phase.

19. An invert drilling mud as claimed in claims 17 and 18, **characterized in that**, together with the methylesters, esters of other, preferably monofunctional and/or lower monofunctional alcohols with monocarboxylic acids make up at least the main part of the oil phase, triglycerides of natural and/or synthetic origin being particularly suitable polyfunctional esters.

20. An invert drilling mud as claimed in claims 17 to 19, **characterized in that** it has a plastic viscosity (PV) in the range from about 10 to 60 mPa.s and a yield point (YP) in the range from about 5 to 40 lb/100 ft², determined in each case at 50°C.

21. An invert drilling mud as claimed in claims 17 to 20, **characterized in that** its disperse water component makes up about 5 to 45% by weight and preferably about 10 to 25% by weight and, in particular, contains dissolved salts of the CaCl₂ and/or KCI type.

22. An invert drilling mud as claimed in claims 17 to 21, **characterized in that** the oil phase of the invert mud has a Brookfield (RVT) viscosity at 0 to 5°C below 50 mPa.s and preferably no more than 40 mPa.s.

## Revendications

1. Utilisation des esters méthyliques d'acides monocarboxyliques de l'intervalle C₆-₂₄ comme phase huile ou comme composant de la phase huile à des concentrations de 10 à 100 % en poids par rapport à la phase huile dans des boues de forage du type émulsion inverse, qui conviennent à une recherche écologique de gisements de pétrole ou de gaz naturel par exemple et qui contiennent dans une phase huile continue une phase aqueuse dispersée en présence de chaux comme réserve alcaline, d'émulsionnants, d'agents alourdissant, d'additifs fluid-loss et si c'est souhaité d'autres additifs usuels.

2. Mode de réalisation selon la revendication 1,
**caractérisé en ce qu'**on
utilise des esters méthyliques d'acide monocarboxylique ou des mélanges de tels esters méthyliques, qui sont coulants et pompables à température ambiante et notamment dans l'intervalle de température de 0 à 5°C.

3. Mode de réalisation selon la revendication 1 ou 2,
**caractérisé en ce qu'**
on utilise comme phase huile de l'ester méthylique ou des mélanges d'esters méthyliques et de « nonpolluting oils », qui présentent dans l'intervalle de température de 0 à 5°C une viscosité Brookfield (RVT) inférieure à 50 mPas, de préférence inférieure à 40 mPas et au plus environ de 30 mPas.

4. Mode de réalisation selon l'une des revendications 1 à 3,
**caractérisé en ce que**
les esters méthyliques ou les mélanges d'esters méthyliques utilisés dans la boue de forage ont des points de solidification (point d'écoulement et point de figeage) inférieurs à 0°C, de préférence inférieurs à -5°C et notamment inférieurs à -10°C, et en même temps des points d'inflammation d'au moins environ 70°C, de préférence au dessus de 90°C.

5. Mode de réalisation selon l'une des revendications 1 à 4,
**caractérisé en ce qu'**
on utilise dans les mélanges d'huile contenant de l'ester méthylique dans la phase huile comme autres composants huileux préférés des huiles de forage hydrocarbures de faible toxicité et/ou des huiles esters d'acides carboxyliques et d'autres alcools, en préférant ici des esters de monoalcools et/ou de polyalcools inférieurs, et comme esters d'alcools polyfonctionnels on préfère notamment les esters de glycérine d'origine naturelle ou synthétique.

6. Mode de réalisation selon les revendications 1 à 5,
**caractérisé en ce qu**
on utilise des esters méthyliques d'acides monocarboxyliques de l'intervalle C₈₋₂₄ en préférant les esters méthyliques à insaturation oléfinique au moins en partie dans l'intervalle des acides carboxyliques de 16 atomes de C et plus, tandis que dans le domaine des nombres de C inférieurs on peut avoir des radicaux d'acides carboxyliques à insaturation oléfinique, mais habituellement ici les esters méthyliques dérivent d'acides monocarboxyliques saturés.

7. Mode de réalisation selon les revendications 1 à 6,
**caractérisé en ce que**
les radicaux d'acides monocarboxyligues insaturés en C16-24 existant dans l'ester méthylique ne représentent pas plus de 35 % en poids d'acides à insaturation oléfinique double ou multiple et qu ainsi de préférence au moins environ 60 % en poids sont à insaturation oléfinique unique et/ou que les radicaux d'acides monocarboxyliques C16-24 existant dans le mélange d'ester représentent plus de 45 % en poids, de préférence plus de 55 % en poids d'acides à insaturation oléfinique double et ou multiple.

8. Mode de réalisation selon les revendications 1 à 7,
**caractérisé en ce que**
les acides carboxyliques saturés présents dans le mélange d'esters méthyliques dans le domaine C_{16/18} ne représentent pas plus d'environ 20 % en poids et notamment pas plus d'environ 10 % en poids, et se situent de préférence dans le domaine des nombres de C les plus faibles.

9. Mode de réalisation selon les revendications 1 à 8,
**caractérisé en ce que**
comme composants de mélange à base ester dans la phase continue d'huile se trouvent des huiles esters à base de monoalcools de 2 à 12, de préférence 4 à 10 atomes de C et des acides monocarboxyliques à insaturation oléfinique unique et/ou multiple de 16 à 24 atomes de C, gui de préférence présentent déjà de leur côté des points de solidification (point d'écoulement et point de figeage) inférieurs à -10%, de préférence inférieurs à -15% et en même temps des points d'inflammation supérieurs à 100 %, de préférence supérieurs à 150°C.

10. Mode de réalisation selon la revendication 9,
**caractérisé en ce qu'**
on utilise avec les esters méthyliques des esters d'acide carboxylique à insaturation oléfinique comme composants du mélange, qui dérivent pour plus de 70 % en poids, de préférence plus de 80 % en poids et notamment plus de 90 % en poids d'acides carboxyliques insaturés oléfiniques de l'intervalle C₁₆₋₂₄ et qui possèdent notamment dans l'intervalle de température du 0 à 5°C une viscosité Broofield (RVT) qui ne dépasse pas 55 mPas, de préférence qui ne dépasse pas 45 mPas.

11. Mode de réalisation selon l'une des revendications 9 et 10,
**caractérisé en ce que**
les esters utilisés comme composants du mélange dérivent d'acides monocarboxyliques insaturés sans dépasser 35 % en poids d'acides à insaturation oléfinique double ou multiple, qui sont constitués pour au moins environ 60 % en poids d'acides insaturés mono-oléfiniques, et/ ou pour plus de 45 % en poids, de préférence plus de 55 % en poids d'acides à insaturation oléfinique double et/ou multiple.

12. Mode de réalisation selon les revendications 1 à 8,
**caractérisé en ce qu'**
on utilise les esters méthyliques avec des esters à base de monoalcools de 2 à 12, notamment 4 à 12 atomes de C et des acides monocarboxyliques saturés aliphatiques avec jusqu'à 16 atomes de C, de préférence surtout avec 12 à 14 atomes de C.

13. Mode de réalisation selon les revendications 1 à 12,
**caractérisé en ce qu'**
on utilise des esters méthyliques d'acides carboxyliques naturels notamment d'origine végétale et/ou des esters méthyliques d'acides carboxyliques synthétiques.

14. Mode de réalisation selon les revendications 1 à 13,
**caractérisé en ce qu'**
on utilise les esters méthyliques dans les boues de forage du type émulsion inverse en présence de composés amines pouvant former un sel avec des acides carboxyliques libres, amines de nature oléophile marquée et de solubilité très limitée dans l'eau.

15. Mode de réalisation selon les revendications 1 à 14,
**caractérisé en ce qu'**
on utilise les esters méthyliques comme diluants et pour améliorer les propriétés rhéologiques de la phase huile, notamment dans l'intervalle de température de 0 à 5°C et/ou pour diminuer la sensibilité aux alcalis de la boue de forage au vieillissement.

16. Mode de réalisation selon les revendications 1 à 15,
**caractérisé en ce que**
les esters sont utilisés dans les liquides de forage, qui contiennent dans la boue de forage du type émulsion inverse en présence de la phase continue huile à base d'ester, la phase aqueuse finement dispersée à des concentrations d'environ 5 à 45 % en poids, de préférence à des concentrations d'environ 5 à 25 % en poids.

17. Liquides de forage du type émulsion inverse qui conviennent par exemple à la recherche écologique de gisements de pétrole ou de gaz naturel et qui contiennent dans une phase huile continue une phase aqueuse dispersée avec de la chaux comme réserve alcaline, des émulsionnants, des agents alourdissant, des additifs fluid-loss et le cas échéant d'autres additifs usuel,
**caractérisé en ce que**
la phase huile contient des esters méthyliques d'acides monocarboxyliques de 6 à 24 atomes de C, à des concentrations de 10 à 100 % en poids par rapport a la phase huile, en mélange, si c'est souhaité avec d'autres composants huiles de la classe des huiles non polluantes.

18. Liquides de forage du type émulsion inverse selon la revendication 17,
**caractérisé en ce que**
la phase huile contient de l'ester méthylique ou des mélanges d'esters méthyliques à des concentrations d'au moins environ 10 % en poi³s par rapport à la phase huile.

19. Liquides de forage du type émulsion inverse selon l'une des revendications 17 et 18,
**caractérisés en ce que**
peuvent coexister avec les esters méthyliques d'autres esters dérivés de préférence de mono- et/ou polyalcools inférieurs et d'acides monocarboxyliques qui constituent au moins la majorité de la phase huile, les esters polyfonctionnels pouvant être notamment des triglycérides d'origine naturelle et/ou synthétique.

20. Liquide de forage du type émulsion inverse selon l'une des revendications 17 à 19,
**caractérisé en ce qu'**
il présente une viscosité plastique (PV) dans l'intervalle d'environ 10 à 60 mPas et une limite d'écoulement (Yield Point YP) dans l'intervalle d'environ 5 à 40 lb/100 pied² - les mesures étant faites à 50°C.

21. Liquide de forage du type émulsion inverse selon l'une des revendications 17 à 21,
**caractérisé en ce que**
sa concentration en eau dispersée représente environ 5 à 45 % en poids, de préférence environ 10 à 25 % en poids, et qu'elle contient en solution notamment des sels du type CaCl₂ et/ou KC1.

22. Liquide de forage du type émulsion inverse selon l'une des revendications 17 à 21,
**caractérisé en ce que**
la phase huile de la boue du type émulsion inverse présente dans l'intervalle de température de 0 à 5°Cune viscosité Brookfield (RVT) inférieure à 50 mPas, de préférence inférieure à 40 mPas.
